# EUROPÄISCHE PATENTSCHRIFT

(11) **EP 1 165 996 B1**
(45) Veröffentlichungstag und Bekanntmachung des Hinweises auf die Patenterteilung: **14.04.2004**
(21) Anmeldenummer: 00908997.0
(22) Anmeldetag: 05.02.2000
(51) Int. Cl.: F16L 3/24, F16B 37/04

(54) **VORRICHTUNG ZUM BEFESTIGEN VON GEGENSTÄNDEN JEDWEDER ART AN DECKEN ODER WÄNDEN**
DEVICE FOR FIXING ANY TYPE OF OBJECT ON CEILINGS AND WALLS
DISPOSITIF POUR FIXER DES OBJETS DE TOUT TYPE SUR DES PLAFONDS OU DES MURS

(30) Priorität: 23.03.1999 DE 19913009
(43) Veröffentlichungstag der Anmeldung: 02.01.2002
(73) Patentinhaber: Halpaus, Wolfgang, 68519 Viernheim (DE); Herzig, Karlheinz, 68519 Viernheim (DE)
(72) Erfinder: Halpaus, Wolfgang, 68519 Viernheim (DE); Herzig, Karlheinz, 68519 Viernheim (DE)
(74) Vertreter: Naumann, Ulrich, Dr.-Ing.
(86) Internationale Anmeldenummer: PCT/DE2000/000360
(87) Internationale Veröffentlichungsnummer: WO 2000/057092

(56) Entgegenhaltungen:
- EP-A- 0 671 581
- DE-C- 4 128 157
- DE-C- 19 617 750
- GB-A- 2 080 904

## Beschreibung

Die Erfindung betrifft eine Vorrichtung zum Befestigen von Gegenständen jedweder Art an Decken oder Wänden, mit den im Oberbegriff von Anspruch 1 beschriebenen Merkmalen. Eine solche Vorrichtung ist z.B. aus der DE-C-19 617 750 bekannt.

Bei der bekannten Vorrichtung ist die Verankerungseinheit äußerst aufwendig in der Konstruktion und dabei nur bedingt betriebssicher. Zwischen dem Anlageteil und dem Eingriffsteil wirkt nämlich ein als Feder ausgeführtes spannbares Rückstellelement, wodurch nach Verdrehen des Anlageteils gegenüber dem Eingriffsteil sich das Eingriffsteil innerhalb der Aufnahme bewegen und in die ursprüngliche Position relativ zu dem Anlageteil zurückstellen kann. Das Rückstellelement bzw. die dazu dienende Feder bewerkstelligt demnach ein Einschnappen des Eingriffsteils innerhalb der Aufnahme, wobei es sich bei einer solchen Feder um ein im Hinblick auf die Montage aufwendiges Bauteil handelt, zumal für das Rückstellelement bzw. für die Feder besondere Anlagen bzw. Wiederlager innerhalb des Anlageteils zu schaffen sind.

Darüberhinaus funktioniert die bekannte Verankerungseinheit nur in Verbindung mit besonderen Verbindungsmitteln, die nämlich das Anlageteil und das Eingriffsteil zusammenhalten. Insoweit ist es dort zwingend erforderlich, dass das Anlageteil und das Eingriffsteil über eine Gewindestange oder dgl. drehbar miteinander verbunden sind. Jedenfalls ist eine besondere Verbindung zwischen den beiden Teilen zwingend erforderlich, sonst würden diese beiden Teile auseinanderfallen.

Des weiteren ist bei der bekannten Verankerungseinheit das Anlageteil mit einer ganz besonderen, einen Hub des Eingriffsteil bewerkstelligenden Gleitfläche ausgestattet, wonach beim Verdrehen des Anlageteils sich das Eingriffsteil vom Anlageteil - zwangsweise - entfernt, um nämlich die nach innen abragenden Schultern bzw. Haltevorsprünge der Aufnahme zu überwinden und diese insgesamt zu hintergreifen. Auch eine solche Konstruktion ist aufwendig.

Der vorliegenden Erfindung liegt daher die Aufgabe zugrunde, eine Vorrichtung zum Befestigen von Gegenständen jedweder Art an Decken oder Wänden der gattungsbildenden Art derart auszugestalten und weiterzubilden, dass eine einfache und sichere Handhabung bei einfachster Konstruktion möglich ist.

Die vorliegende Erfindung löst die voranstehende Aufgabe durch die Merkmale des Patentanspruches 1.

Erfindungsgemäß ist erkannt worden, dass eine besonders einfache Ausgestaltung der Vorrichtung dann möglich ist, wenn das Eingriffsteil und das Anlageteil über elastische Mittel miteinander verbunden sind, die gleichzeitig zur Rückstellung der Drehbewegung zwischen dem Anlageteil und dem Eingriffsteil dienen, um nämlich bei Drehen des Anlageteils das Eingriffsteil in die hintergreifende Position zu verbringen und dort in dieser Position zu halten. Folglich übernehmen die elastischen Mittel gleichermaßen zwei Funktionen, halten nämlich das Eingriffsteil und das Anlageteil zusammen und bewerkstelligen beim Drehen des Anlageteils ein bei hinreichender Vorspannung nachfolgendes Drehen des Eingriffsteils innerhalb der Aufnahme, so dass bei hintergreifendem Eingriffsteil die Relativlage zwischen Eingriffsteil und Anlageteil wieder der ursprünglichen Positionierung zwischen den beiden Teilen entspricht. Besondere Haltemittel zwischen dem Anlageteil und dem Eingriffsteil sind - im Gegensatz zu der aus dem Stand der Technik bekannten Vorrichtung - nicht mehr erforderlich.

Gemäß der Erfindung sind die elastischen Mittel derart ausgeführt und angebracht, dass sie beim Drehen des Anlageteils relativ zu dem Eingriffsteil eine Beabstandung des Eingriffsteils von dem an der Aufnahme anliegenden Anlageteil und somit einen Hub des Eingriffsteils zum Hintergreifen der Schultern wirken. Insoweit kommt den elastischen Mitteln eine dritte Funktion zu, nämlich den Hub des Eingriffsteils zum Hintergreifen der Schultern zu bewerkstelligen. Daraus ergibt sich eine besonders einfache Ausgestaltung der beanspruchten Vorrichtung, wonach nämlich die im Stand der Technik üblichen Gleitflächen zur Bewerkstelligung des Hubs des Eingriffsteils überflüssig geworden sind.

Im Konkreten entsteht der Hub des Eingriffsteils dadurch, dass sich die elastischen Mittel beim Drehen des Anlageteils zumindest geringfügig zwischen das Anlageteil und das Eingriffsteil schieben, drücken oder klemmen, so dass dadurch eine Beabstandung zwischen dem Eingriffsteil und dem Anlageteil stattfindet. Diese Beabstandung muss entsprechend der Dimensionierung der elastischen Mittel groß genug sein, um die nach innen abragenden Schultern der Aufnahme hintergreifen zu können. Nach Überwindung der Schultern kann sich das Eingriffsteil innerhalb der Aufnahme drehen und bei voller Hintergreifung der Schultern gegenüber dem Aufnahmeteil wieder die ursprüngliche Position einnehmen. Danach ist bereits eine Befestigung der Verankerungseinheit realisiert, wobei danach ein Verschrauben der Teile der Verankerungseinheit - bspw. mittels Gewindestange und Mutter - zur Stabilisierung erforderlich ist. Dies wird später noch erörtert werden.

Die elastischen Mittel sind vorzugsweise aus Gummi gefertigt, wobei es sich bei den elastischen Mitteln im Konkreten um ein geschlossenes Gummiband handeln kann. Das Gummiband ist in weiter vorteilhafter Weise um das Eingriffsteil geschlungen und an dem Anlageteil in vorzugsweise vorgespanntem Zustand festgelegt. Dabei kann das Gummiband das Eingriffsteil mit sich überkreuzenden Bandabschnitten übergreifen und das Anlageteil durch entsprechende Ausnehmungen hindurch hintergreifen, so dass im vorgespannten Zustand des Gummibandes eine sichere - elastische - Verbindung zwischen dem Anlageteil und dem Eingriffsteil realisiert ist, jedenfalls in hinreichendem Maße, um die Verankerungseinheit in die eingreifende Position zu verbringen.

Bei Verwendung eines Gummibandes als elastisches Mittel kann sich dieses beim Drehen des Anlageteils mit den jeweiligen Bandabschnitten zwischen das Anlageteil und das Eingriffsteil drücken, wodurch auf vier Seiten des Eingriffsteils bzw. des Anlageteils eine Hubbewegung des Eingriffsteils initiiert wird. Eine gleichmäßige Beabstandung zwischen Eingriffsteil und Anlageteil ist dadurch realisiert, so dass die nach innen abragenden Schultern durch das Eingriffsteil überwindbar sind.

Die Dicke des Gummibandes sollte in etwa der Dicke der durch das Eingriffsteil zu überwindenden Schultern entsprechen, um nämlich einen hinreichenden Hub zur Überwindung und zum Hintergreifen der Schultern gewährleisten zu können.

Des weiteren ist es von Vorteil, wenn das Eingriffsteil mit seinen zum Hintergreifen der Schultern dienenden Randabschnitten gegenüber seiner zur Kontaktierung des Anlageteils dienenden Fläche in beabstandender Weise erhaben ist. Insoweit lässt sich das Eingriffsteil - mit dem Anlageteil bzw. durch Anlegen des Anlageteils an die Aufnahme - bereits nach innen hinter den Bereich der Schultern verbringen, so dass ein allenfalls geringer Hub zum Hintergreifen des Eingriffsteils erforderlich ist. Zur Begünstigung des hier erforderlichen Hintergreifens der Schultern durch das Eingriffsteil könnte das Eingriffsteil an seinen zum Hintergreifen der Schultern dienenden Randabschnitten derart angefast sein, dass gegenüber den Schultern eine das Hintergreifen erleichternde Gleitfläche gebildet ist. Alternativ und/oder ergänzend dazu könnten die Schultern der Aufnahme zur freien Innenseite hin abfallend bzw. sich in der Dicke verjüngen und dabei eine das Hintergreifen des Eingriffsteils erleichternde Gleitfläche bilden. Auch insoweit wäre die hintergreifende Drehbewegung des Eingriffsteils innerhalb der Aufnahme begünstigt.

Das Eingriffsteil selbst könnte im Sinne eines Parallelogramms oder trapezförmig ausgebildet sein und im gedrehten und im Eingriff befindlichen Zustand mit seinen beiden kurzen Kanten an gegenüberliegenden Innenwandungen der Aufnahme zur Anlage kommen. Eine Abstimmung der Dimensionierung einerseits des Eingriffsteils und andererseits der Aufnahme ist dabei erforderlich. Die kurzen Kanten des Eingriffsteils bilden gleichzeitig mit den Innenwandungen der Aufnahme eine ein weiteres Drehen und somit ein Lösen des Eingriffsteils aus der hintergreifenden Position verhindernde Anlage bzw. einen entsprechenden Anschlag.

Des weiteren ist es von ganz besonderem Vorteil, wenn der zur Beabstandung zwischen dem Anlageteil und dem Eingriffsteil ausgebildete erhabene Bereich des Eingriffsteils derart ausgebildet und dimensioniert ist, dass er bei in Eingriff befindlichem Eingriffsteil von innerhalb der Halterung in den Bereich zwischen den Schultern hineinragt und derart dimensioniert ist, dass er eine Drehsicherung für das Eingriffsteil bildet. Ein weiteres Drehen des Eingriffsteils ist dabei wirksam verhindert, jedenfalls dann, wenn eine intakte Verbindung zwischen dem Eingriffsteil und dem Anlageteil aufgrund der elastischen Mittel bzw. aufgrund des Gummibandes realisiert ist.

Ebenso ist es denkbar, dass das Anlageteil zum Eingriffsteil hin sich erstreckende Eingriffsflanken aufweist, die nach dem zum Hintergreifen des Eingriffsteils führenden Drehen des Anlageteils und nach Erreichen der hintergreifenden Position des Eingriffsteils von außerhalb in den Bereich zwischen die Schultern zumindest geringfügig eingreifen und ebenfalls eine Drehsicherung für das Anlageteil bilden. Insoweit wären sowohl das Eingriffsteil von innerhalb der Aufnahme wie auch das Anlageteil von außerhalb der Aufnahme gegenüber den nach innen abragenden Schultern drehgesichert.

Zur weiterreichenden Verbindung zwischen dem Anlageteil und dem Eingriffsteil, insbesondere aber zur Befestigung von Gegenständen jedweder Art an der so realisierten Verankerungseinheit, umfassen die Anschlussmittel des Anlageteils einen vorzugsweise mittigen Durchgang für einen Ankerstab. Sonstige Haltemaßnahmen sind realisierbar, wobei der hier angesprochene Ankerstab lediglich beispielhaft genannt ist. Der Durchgang im Anlageteil könnte mit einem Innengewinde ausgestattet sein.

Des weiteren könnten die Anschlussmittel einen vorzugsweise mittigen Durchgang im Eingriffsteil aufweisen, der ebenfalls mit einem Innengewinde ausgestattet sein kann. Der zuvor erwähnte Ankerstab könnte sich dabei durch den Durchgang im Anlageteil hindurch in das Eingriffsteil hinein erstrecken und mit diesem - wie auch mit dem Anlageteil - verschraubt sein, wobei eine relative Drehbewegung zwischen dem Anlageteil und dem Eingriffsteil möglich ist. Der Ankerstab könnte im Konkreten als Gewindestange ausgeführt sein, so dass an das Außengewinde der Gewindestange beliebige weitere Halterungen, bspw. zur Aufnahme von Rohren oder dgl., anbringbar sind. Durch Verschrauben der Verankerungseinheit bzw. der die Verankerungseinheit bildenden Teile - Anlageteil und Eingriffsteil - ist eine sichere Verankerung an der Aufnahme realisiert und werden Mittel bereitgestellt, um an der gesicherten Verankerungseinheit Gegenstände befestigen bzw. aufhängen zu können.

Schließlich sei angemerkt, dass die Aufnahme als Profilschiene mit im wesentlichen U-förmigen Querschnitt und nach innen abragenden Schultern ausgeführt sein kann. Wesentlich ist dabei jedenfalls, dass wie auch immer ausgestaltete Schultern vorgesehen sind, damit eine Abstützung der Verankerungseinheit durch Klemmwirkung zwischen dem Eingriffsteil und dem Anlageteil realisierbar ist.
- Fig. 1: in einer schematischen Seitenansicht eine erfindungsgemäße Vorrichtung zum Befestigen von Gegenständen jedweder Art an Decken oder Wänden, wobei dort die Verankerungseinheit in eine Profilschiene eingesetzt ist,
- Fig. 2: die Verankerungseinheit aus Fig. 1 in einer Draufsicht, die das Zusammenwirken zwischen dem Anlageteil und dem Eingriffsteil sowie deren Verbindung mittels Gummiband erkennen lässt und
- Fig. 3: das Eingriffsteil der Verankerungseinheit in einer Draufsicht.

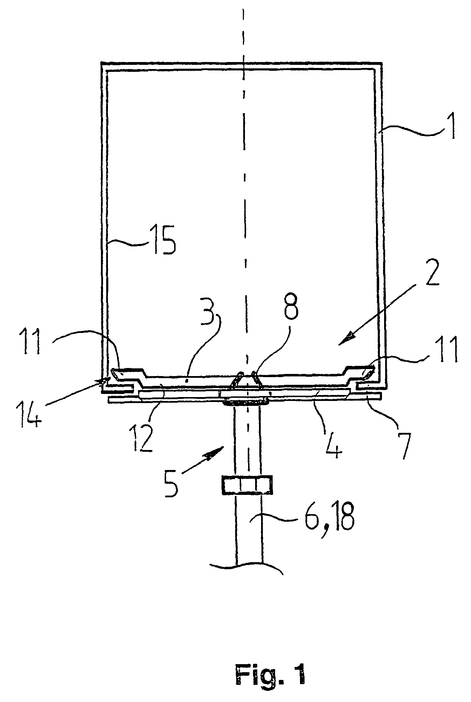

Fig. 1 zeigt in einer schematischen Seitenansicht eine erfindungsgemäße Vorrichtung zum Befestigen von Gegenständen jedweder Art an Decken oder Wänden, mit einer unmittelbar der Decke oder Wand zuordenbaren Aufnahme 1, wobei es sich dabei im Konkreten um eine lediglich im Querschnitt - schematisch - gezeigte Profilschiene handelt. Die Vorrichtung umfasst - neben der Aufnahme 1 - eine zum Halten der Gegenstände dienende Verankerungseinheit 2, wobei die Verankerungseinheit 2 wiederum ein zum Eingriff in die Aufnahme 1 dienendes Eingriffsteil 3, ein im Sinne eines Widerlagers zur Anlage an der Aufnahme 1 dienendes Anlageteil 4 und dem Anlageteil 4 und dem Eingriffsteil 3 zugeordnete Anschlussmittel 5 für ein Verbindungselement 6 umfasst. Die Verankerungseinheit 2 ist durch Drehen des Anlageteils 4 relativ zu dem in Eingriff befindlichen Eingriffsteil 3 in der Aufnahme 1 und durch ein dabei hervorgerufenes Hintergreifen beidseitiger Schultern 7 der Aufnahme 1 durch das Eingriffsteil 3 festlegbar. Fig. 1 zeigt eine Situation, bei der sich die Verankerungseinheit 2 im festgelegten bzw. das Eingriffsteil 3 die Schultern 7 hintergreifenden Zustand befindet. Des weiteren ist in Fig. 1 angedeutet, dass als Verbindungselement eine Gewindestange 6 vorgesehen ist, die das Eingriffsteil 3 und das Anlageteil 4 gleichermaßen miteinander verbindet.

Erfindungsgemäß ist das Eingriffsteil 3 über elastische Mittel 8 mit dem Anlageteil 4 verbunden, wobei die elastischen Mittel 8 gleichzeitig zur Rückstellung der Drehbewegung zwischen dem Anlageteil 4 und dem Eingriffsteil 3 dienen, um nämlich beim Drehen des Anlageteils 4 das Eingriffsteil 3 in die die Schultern 7 hintergreifende Position zu verbringen und dort in dieser Position zu halten. Das in Fig. 1 gezeigte Verbindungselement 6 kann nachträglich angebracht werden, ist jedenfalls zum Eingriff der Verankerungseinheit 2 in die Aufnahme 1 nicht zwingend erforderlich.

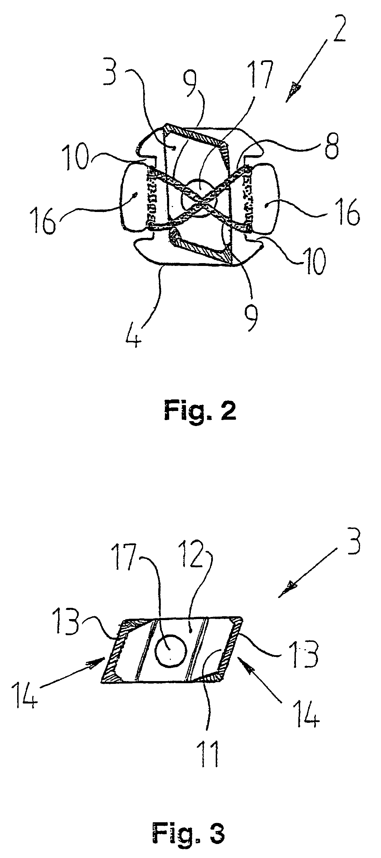

Die Fig. 1 und 2 zeigen gemeinsam, dass die elastischen Mittel 8 derart ausgeführt und angebracht sind, dass sie beim Drehen des Anlageteils 4 relativ zu dem Eingriffsteil 3 eine Beabstandung des Eingriffsteils 3 von dem an der Aufnahme 1 anliegenden Anlageteil 4 und somit einen Hub des Eingriffsteils 3 zum Hintergreifen der Schultern 7 bewirken. Dazu drücken sich die elastischen Mittel 8 in den Bereich zwischen das Anlageteil 4 und das Eingriffsteil 3, wobei die elastischen Mittel 8 bei dem hier gewählten Ausführungsbeispiel als geschlossenes Gummiband 8 ausgeführt sind. Das Gummiband 8 ist um das Eingriffsteil 3 geschlungen und an dem Anlageteil 4 in vorgespanntem Zustand festgelegt, wobei das Gummiband 8 das Eingriffsteil 3 mit sich überkreuzenden Bandabschnitten 9 übergreift und das Anlageteil 4 durch Ausnehmungen 10 hintergreift. Dadurch ist eine "hosenträgerartige" Festlegung des Eingriffsteils 3 am Anlageteil 4 realisiert. Beim Drehen des Anlageteils 4 drückt sich das Gummiband 8 mit den jeweiligen Bandabschnitten 9 - quasi symmetrisch - zwischen das Anlageteil 4 und das Eingriffsteil 3 und bewirkt dadurch den Hub des Eingriffsteils 3 zum Hintergreifen der Schultern 7 der Aufnahme 1. Das Gummiband 8 hat in etwa eine Dicke, die der Dicke der zu überwindenden Schultern 7 entspricht.

Des weiteren ist in den Fig. 2 und 3 angedeutet, dass das Eingriffsteil 3 mit seinen zum Hintergreifen der Schultern 7 dienenden Randabschnitten 11 gegenüber seiner zur Kontaktierung des Anlageteils 4 dienenden Fläche in beabstandender Weise erhaben ist. Dieser Bereich ist mit Bezugszeichen 12 gekennzeichnet. Diese Vorkehrung erleichtert das Hintergreifen der Schultern 7 durch das Eingriffsteil 3.

Des weiteren ist das Eingriffsteil 3 an seinem zum Hintergreifen der Schultern 7 dienenden Randabschnitten 11 derart angefast, dass gegenüber den Schultern 7 eine das Hintergreifen erleichternde Gleitfläche 13 gebildet ist. Diese Gleitfläche 13 ist in den Fig. 2 und 3 lediglich angedeutet, wobei in Fig. 2 die Gleitflächen 13 auf der dem Anlageteil 4 zugewandten Seite ausgebildet und in der Figur lediglich angedeutet sind.

Ebenso ist es denkbar, dass die Schultern 7 der Aufnahme 1 zur freien Innenseite hin abfallen bzw. sich in der Dicke verjüngen und dabei eine das Hintergreifen des Eingriffsteils 3 erleichternde Gleitfläche bilden, wobei dies in den Figuren nicht dargestellt ist.

Die Fig. 2 und 3 zeigen besonders deutlich, dass das Eingriffsteil 3 im Sinne eines Parallelogramms ausgebildet ist. Fig. 1 lässt in Ergänzung dazu erkennen, dass das Eingriffsteil 3 im gedrehten und im Eingriff befindlichen Zustand mit den beiden kurzen Kanten 14 an gegenüberliegenden Innenwandungen 15 der Aufnahme 1 zur Anlage kommt.

Fig. 1 zeigt des weiteren andeutungsweise, dass der zur Beabstandung zwischen dem Anlageteil 4 und dem Eingriffsteil 3 ausgebildete erhabene Bereich 12 derart ausgebildet und dimensioniert ist, dass er bei im Eingriff befindlichen Eingriffsteil 3 von innerhalb der Aufnahme 1 und im Bereich zwischen den Schultern 7 hineinragt und derart dimensioniert ist, dass er eine Drehsicherung für das Eingriffsteil 3 bildet.

Des weiteren lässt Fig. 1 erkennen, dass das Anlageteil 4 zum Eingriffsteil 3 hin sich erstreckende Eingriffsflanken 16 aufweist, die nach dem zum Hintergreifen des Eingriffsteils 3 führenden Drehen des Anlageteils 4 und nach Erreichen der hintergreifenden Position des Eingriffsteils 3 von außerhalb der Aufnahme 1 in den Bereich zwischen die Schultern 7 zumindest geringfügig eingreifen und dort ebenfalls eine Drehsicherung - diesmal für das Anlageteil 4 - bilden.

Die Figuren zeigen gemeinsam, dass die Anschlussmittel 5 des Anlageteils 4 einen mittigen Durchgang 17 für einen Ankerstab 18 aufweisen. Sowohl der Durchgang 17 im Anlageteil 4 als auch der Durchgang 17 im Eingriffsteil 3 sind mit einem Innengewinde ausgebildet, so dass sich der Ankerstab 18 mit einem entsprechenden Außengewinde in den Durchgang 17 einschrauben lässt. Mittels des Ankerstabs 18 lässt sich das Eingriffsteil 3 fest mit dem Anlageteil 4 verschrauben, so dass gegenüber den Schultern 7 der Aufnahme eine Klemmwirkung und somit eine sichere Verbindung der Verankerungseinheit 2 realisiert ist.

## Patentansprüche

1. Vorrichtung zum Befestigen von Gegenständen jedweder Art an Decken oder Wänden, mit einer unmittelbar der Decke oder Wand zuordenbaren Aufnahme (1) und einer zum Halten der Gegenstände dienenden Verankerungseinheit (2), wobei die Verankerungseinheit (2) ein zum Eingriff in die Aufnahme (1) dienendes Eingriffsteil (3), ein im Sinne eines Widerlagers zur Anlage an der Aufnahme (1) dienendes Anlageteil (4) und zumindest mit dem Anlageteil (4) verbundene Anschlussmittel (5) für ein Verbindungselement (6) umfasst, wobei die Verankerungseinheit (2) durch Drehen des in Eingriff befindlichen Eingriffsteils (3) relativ zum Anlageteil (4) in der Aufnahme (1) und durch ein dabei hervorgerufenes Hintergreifen beidseitiger Schultern (7) der Aufnahme (1) festlegbar ist und wobei das Eingriffsteil (3) über elastische Mittel (8) mit dem Anlageteil verbunden ist, die zur Rückstellung der Drehbewegung zwischen dem Anlageteil (4) und dem Eingriffsteil (3) dienen, um nämlich bei Drehen des Anlageteils (4) das innerhalb der Aufnahme (1) befindliche Eingriffsteil (3) in die hintergreifende Position zu verbringen,
**dadurch gekennzeichnet, dass** die elastischen Mittel (8) derart ausgeführt und angebracht sind, dass sie sich beim Drehen des Anlageteils (4) relativ zu dem Eingriffsteil (3) zumindest geringfügig zwischen das Anlageteil (4) und das Eingriffsteil (3) schieben bzw. drücken, so dass eine Beabstandung des Eingriffsteil (3) von dem an der Aufnahme (1) anliegenden Anlageteil (4) und somit ein Hub des Eingriffsteils (3) zum Hintergreifen der Schultern (17) entsteht.

2. Vorrichtung nach Anspruch 1, **dadurch gekennzeichnet, dass** die elastischen Mittel (8) aus Gummi gefertigt sind, wobei diese vorzugsweise als geschlossenes Gummiband ausgeführt sind, wobei das Gummiband (8) um das Eingriffsteil (3) geschlungen und an dem Anlageteil (4) in vorzugsweise vorgespanntem Zustand festgelegt ist, wobei das Gummiband (8) das Eingriffsteil (3) mit sich überkreuzenden Bandabschnitten (9) übergreifen und das Anlageteil (4) durch Ausnehmungen (10) hindurch hintergreift, wobei sich das Gummiband (8) beim Drehen des Anlageteils (4) mit den jeweiligen Bandabschnitten (9) zwischen das Anlageteil (4) und das Eingriffsteil (3) drückt und wobei die Dicke des Gummibandes (8) in etwa der Dicke der durch das Eingriffsteil (3) zu überwindenden Schultern (7) entspricht.

3. Vorrichtung nach Anspruch 1 oder 2, **dadurch gekennzeichnet, dass** das Eingriffsteil (3) mit seinen zum Hintergreifen der Schultern (7) dienenden Randabschnitten (11) gegenüber seiner zur Kontaktierung des Anlageteils (4) dienenden Fläche in beabstandender Weise erhaben ist, und/oder das Eingriffsteil (3) an seinen zum Hintergreifen der Schultern (7) dienenden Randabschnitten (11) derart angefast ist, dass gegenüber den Schultern (7) eine das Hintergreifen erleichternde Gleitfläche (13) gebildet ist.

4. Vorrichtung nach einem der Ansprüche 1 bis 3, **dadurch gekennzeichnet, dass** das Eingriffsteil (3) im Sinne eines Parallelogramms oder trapezförmig ausgebildet ist und im gedrehten und im Eingriff befindlichen Zustand mit den beiden kurzen Kanten (14) an gegenüberliegenden Innenwandungen (15) der Aufnahme (1) zur Anlage kommt.

5. Vorrichtung nach einem der Ansprüche 1 bis 4, **dadurch gekennzeichnet, dass** ein zur Beabstandung zwischen dem Anlageteil (4) und dem Eingriffsteil (3) ausgebildete erhabener Bereich (12) derart ausgebildet und dimensioniert ist, dass er bei in Eingriff befindlichem Eingriffsteil (3) von innerhalb der Aufnahme (1) in den Bereich zwischen den Schultern (7) hineinragt und derart dimensioniert ist, dass er eine Drehsicherung für das Eingriffsteil (3) bildet.

6. Vorrichtung nach einem der Ansprüche 1 bis 5, **dadurch gekennzeichnet, dass** das Anlageteil (4) zum Eingriffsteil (3) hin sich erstreckende Eingriffsflanken (16) aufweist, die nach dem zum Hintergreifen des Eingriffsteils (3) führenden Drehen des Anlageteils (4) und nach Erreichen der hintergreifenden Position des Eingriffsteils (3) von außerhalb in den Bereich zwischen die Schultern (7) zumindest geringfügig eingreifen und eine Drehsicherung für das Anlageteil (4) bilden.

7. Vorrichtung nach einem der Ansprüche 1 bis 6, **dadurch gekennzeichnet, dass** die Anschlussmittel (5) des Anlageteils (4) einen vorzugsweise mittigen Durchgang (17) für einen Ankerstab (18) umfassen, wobei der Durchgang (17) mit einem Innengewinde ausgestattet ist.

8. Vorrichtung nach einem der Ansprüche 1 bis 7, **dadurch gekennzeichnet, dass** die Anschlußmittel (5) einen vorzugsweise mittigen Durchgang (17) im Eingriffsteil (3) aufweisen und dass der Durchgang (17) mit einem Innengewinde ausgestattet ist.

9. Vorrichtung nach Anspruch 7 oder 8, **dadurch gekennzeichnet, dass** das Eingriffsteil (3) und das Anlageteil (4) über eine durch das Anlageteil (4) hindurch in das Eingriffsteil (3) greifende, als Gewindestange ausgeführte Stange drehbar verbunden sind, wobei die vom Anlageteil (4) abragende Gewindestange zur Befestigung der Gegenstände dient.

10. Vorrichtung nach einem der Ansprüche 1 bis 9, **dadurch gekennzeichnet, dass** die Aufnahme (1) als Profilschiene mit im wesentlichen U-förmigem Querschnitt und nach innen abragenden Schultern (7) ausgeführt ist.

## Claims

1. Device for fixing objects of any type to ceilings or walls, with a mount (1), which can be directly associated with the ceiling or wall, and an anchoring unit (2), which serves to retain the objects, wherein the anchoring unit (2) comprises an engagement part (3), which serves to engage in the mount (1), a bearing part (4), which serves the purpose of an abutment for bearing against the mount (1), and attachment means (5), which are connected at least to the bearing part (4), for a connection element (6), wherein the anchoring unit (2) can be secured by rotating the engaged engagement part (3) relative to the bearing part (4) in the mount (1) and by a resulting engagement behind shoulders (7), disposed on both sides, of the mount (1), and wherein the engagement part (3) is connected to the bearing part via elastic means (8), which serve to restore the rotational movement between the bearing part (4) and the engagement part (3) in order to bring the engagement part (3) located in the mount (1) into the position of engagement behind the shoulders when the bearing part (4) rotates,
**characterised in that** the elastic means (8) are formed and fitted such that they push or press at least slightly between the bearing part (4) and the engagement part (3) when the bearing part (4) rotates relative to the engagement part (3), so that the engagement part (3) is spaced apart from the bearing part (4), which bears against the mount (1), and the engagement part (3) therefore lifts to engage behind the shoulders (7).

2. Device according to Claim 1, **characterised in that** the elastic means (8) are made of rubber, wherein these are preferably formed as a closed rubber band, wherein the rubber band (8) is wrapped around the engagement part (3) and secured to the bearing part (4), preferably in a preloaded state, wherein the rubber band (8) engages over the engagement part (3) by way of intersecting band portions (9), and the bearing part (4) engages through recesses (10), wherein the rubber band (8) presses by way of the respective band portions (9) between the bearing part (4) and the engagement part (3) when the bearing part (4) rotates, and wherein the thickness of the rubber band (8) corresponds approximately to the thickness of the shoulders (7) which are to be overcome by the engagement part (3).

3. Device according to Claim 1 or 2, **characterised in that** the engagement part (3) is raised in spaced fashion by way of its boundary portions (11), which serve to engage behind the shoulders (7), with respect to its face which serves to contact the bearing part (4), and/or the engagement part (3) is chamfered at its boundary portions (11) serving to engage behind the shoulders (7) such that a slide face (13), which facilitates this engagement, is formed opposite the shoulders (7).

4. Device according to any one of Claims 1 to 3,
**characterised in that** the engagement part (3) is formed like a parallelogram or in the shape of a trapezium and comes to bear by way of the two short edges (14) against opposite inner walls (15) of the mount (1) in the rotated and engaged state.

5. Device according to any one of Claims 1 to 4,
**characterised in that** a raised region (12), which is formed to provide a spacing between the bearing part (4) and the engagement part (3), is formed and dimensioned such that, when the engagement part (3) is engaged, it projects from inside the mount (1) into the region between the shoulders (7) and is dimensioned such that it forms a rotational lock for the engagement part (3).

6. Device according to any one of Claims 1 to 5,
**characterised in that** the bearing part (4) has engagement flanks (16), which extend towards the engagement part (3) and which, after the bearing part (4) has been rotated to engage the engagement part (3) behind the shoulders and after the engagement part (3) has reached the position of engagement behind the shoulders, engage from outside at least slightly in the region between the shoulders (7) and form a rotational lock for the bearing part (4).

7. Device according to any one of Claims 1 to 6,
**characterised in that** the attachment means (5) of the bearing part (4) comprise a preferably central passage (17) for an anchor rod (18), wherein the passage (17) is provided with an internal thread.

8. Device according to any one of Claims 1 to 7,
**characterised in that** the attachment means (5) have a preferably central passage (17) in the engagement part (3), and that the passage (17) is provided with an internal thread.

9. Device according to Claim 7 or 8, **characterised in that** the engagement part (3) and the bearing part (4) are rotatably connected via a rod reaching through the bearing part (4) into the engagement part (3) and formed as a threaded rod, wherein the threaded rod protruding from the bearing part (4) serves to fix the objects.

10. Device according to any one of Claims 1 to 9,
**characterised in that** the mount (1) is formed as a profile rail with a substantially U-shaped cross section and inward protruding shoulders (7).

## Revendications

1. Dispositif pour la fixation d'objets de tous types à des plafonds ou des murs, avec un logement (1) pouvant être adjoint directement au plafond ou au mur et une unité d'ancrage (2) servant à maintenir les objets, l'unité d'ancrage (2) comprenant une pièce de prise (3) servant pour la prise dans le logement (1), une pièce d'appui (4) servant pour l'appui sur le logement (1) dans le sens d'une butée et des moyens de raccordement (5) au moins reliés à la pièce d'appui (4) pour un élément de liaison (6), l'unité d'ancrage (2) pouvant être fixée par rotation de la pièce de prise (3), se trouvant en prise, par rapport à la pièce d'appui (4) dans le logement (1) et par une prise arrière engendrée de ce fait d'épaulements (7) des deux côtés du logement (1) et la pièce de prise (3) étant reliée à la pièce d'appui par des moyens élastiques (8) qui servent à rappeler le déplacement de rotation entre la pièce d'appui (4) et la pièce de prise (3) pour,en fait, faire passer la pièce de prise (3) se trouvant à l'intérieur du logement (1) à la position de prise arrière lors de la rotation de la pièce d'appui (4),
**caractérisé par le fait que** les moyens élastiques (8) sont réalisés et montés de telle manière que, lors de la rotation de la pièce d'appui (4) par rapport à la pièce de prise (3), ils glissent ou respectivement poussent au moins légèrement entre la pièce d'appui (4) et la pièce de prise (3), de telle sorte qu'il se produit un écartement de la pièce de prise (3) d'avec la pièce d'appui (4) en appui sur le logement (1) et en conséquence une levée de la pièce de prise (3) pour la prise arrière des épaulements (7).

2. Dispositif selon la revendication 1,
**caractérisé par le fait que** les moyens élastiques (8) sont fabriqués en caoutchouc, ceux-ci étant de préférence réalisés sous forme de bande de caoutchouc fermée, la bande de caoutchouc (8) étant enroulée autour de la pièce de prise (3) et fixée, de préférence à l'état précontraint, à la pièce d'appui (4), la bande de caoutchouc (8) chevauchant la pièce de prise (3) par des sections de bande (9) qui se croisent et vient en prise à travers derrière la pièce d'appui (4) à travers des évidements (10), la bande de caoutchouc (8) poussant par les sections de bande (9) respectives entre la pièce d'appui (4) et la pièce de prise (3) lors de la rotation de la pièce d'appui (4) et l'épaisseur de la bande de caoutchouc (8) correspondant approximativement à l'épaisseur des épaulements (7) à surmonter par la pièce de prise (3).

3. Dispositif selon la revendication 1 ou 2,
**caractérisé par le fait que** la pièce de prise (3) est proéminente de manière écartée, par ses sections de bord (11) servant à la prise derrière les épaulements (7), par rapport à sa surface servant à la mise en contact de la pièce d'appui (4) ,et/ou la pièce de prise (3) est biseautée à ses sections de bord (11) servant à la prise derrière les épaulements (7) de telle manière qu'une surface de glissement (13) facilitant la prise arrière est formée par rapport aux épaulements (7).

4. Dispositif selon l'une des revendications 1 à 3,
**caractérisé par le fait que** la pièce de prise (3) est conformée dans le sens d'un parallélogramme ou en forme de trapèze et, à l'état tourné et se trouvant en prise, vient en appui par les deux arêtes (14) courtes sur des parois intérieures (15) opposées du logement (1).

5. Dispositif selon l'une des revendications 1 à 4,
**caractérisé par le fait qu'**une zone (12) formée proéminente pour l'écartement entre la pièce d'appui (4) et la pièce de prise (3) est conformée et dimensionnée de telle manière qu'elle fait saillie depuis l'intérieur du logement (1) dans l'intérieur de la zone entre les épaulements (7) lorsque la pièce de prise (3) se trouve en prise et est dimensionnée de telle manière qu'elle forme une sécurité anti- rotation pour la pièce de prise (3).

6. Dispositif selon l'une des revendications 1 à 5,
**caractérisé par** le fait de que la pièce d'appui (4) présente des flancs de prise (16) s'étendant en direction de la pièce de prise (3), lesquels viennent en prise au moins légèrement depuis l'extérieur dans la zone entre les épaulements (7) et forment une sécurité anti-rotation pour la pièce d'appui (4) après atteinte de la position de prise arrière de la pièce de prise (3) depuis l'extérieur.

7. Dispositif selon l'une des revendications 1 à 6,
**caractérisé par le fait que** les moyens de raccordement (5) de la pièce d'appui (4) comprennent un passage (17), de préférence central, pour une barre d'ancrage (18), le passage (17) étant équipé d'un taraudage.

8. Dispositif selon l'une des revendications 1 à 7,
**caractérisé par le fait que** les moyens de raccordement (5) présentent un passage (17), de préférence central, dans la pièce de prise (3) et que le passage (17) est équipé d'un taraudage.

9. Dispositif selon la revendication 7 ou 8,
**caractérisé par le fait que** la pièce de prise (3) et la pièce d'appui (4) sont reliées à rotation par l'intermédiaire d'une tige, réalisée sous forme de tige filetée, en prise à travers la pièce d'appui (4) dans la pièce de prise (3), la tige filetée en saillie de la pièce d'appui (4) servant à la fixation des objets.

10. Dispositif selon l'une des revendications 1 à 9,
**caractérisé par le fait que** le logement (1) est réalisé sous,forme de rail profilé avec une section sensiblement en forme de U et des épaulements (7) en saillie vers l'intérieur.
